# EUROPÄISCHE PATENTANMELDUNG

(11) **EP 4 379 076 A2**
(43) Veröffentlichungstag der Anmeldung: **05.06.2024**
(21) Anmeldenummer: 23204532.8
(22) Anmeldetag: 19.10.2023
(51) Int. Cl.: C22B 26/12, C01D 15/08

(54) **VERFAHREN UND VORRICHTUNG ZUR GEWINNUNG VON LITHIUMCARBONAT AUS SOLE**

(30) Priorität: 14.11.2022 DE 102022130083
(71) Anmelder: EnBW Energie Baden-Württemberg AG, 76131 Karlsruhe (DE)
(72) Erfinder: Herrmann, Laura, 76227 Karlsruhe (DE); Fechner, Dorothee, 79312 Emmendingen (DE); Kaymakci, Elif, 76337 Waldbronn (DE); Kölbel, Thomas, 76228 Karlsruhe (DE); Graczyk-Zajac, Magdalena, 69126 Heidelberg (DE)
(74) Vertreter: DREISS Patentanwälte PartG mbB

(57) **Zusammenfassung**

Es wird ein Verfahren und eine Vorrichtung dargestellt, mit deren Hilfe Lithiumcarbonat durch Zugabe von CO₂ in eine Lithium-Ionen-haltige Sole gewonnen werden kann. Dieses Verfahren und diese Vorrichtung eignen sich für Sole und Kohlendioxid aus verschiedenen Quellen. Eine bevorzugte Anwendung ist die Gewinnung von Lithiumcarbonat aus geologischem Tiefenwasser unter Verwendung des in dem Tiefenwasser enthaltenen Kohlendioxids.

## Beschreibung

Die vorliegende Erfindung betrifft ein Verfahren zur Gewinnung von Lithiumcarbonat aus Sole. Im Sinne der Erfindung ist Sole eine wässrige Lösung von Salzen, die Lithium Ionen enthält. Die Sole kann aus Meerwasserentsalzungsanlagen und Bohrungen, insbesondere auch Geothermiebohrungen, stammen oder beim Recycling von Lithium-Ionen-Akkumulatoren anfallen.

Reines, metallisches Lithium ist sehr reaktiv und wird daher nicht in dieser Form, sondern in einer stabilen Verbindung, wie zum Beispiel Lithiumcarbonat Li₂CO₃, gehandelt und transportiert.

Grund- und Tiefenwasser sowie Meerwasser bzw. die "Abfallprodukte" von Meerwasserentsalzungsanlagen enthalten Lithium und können eine Sole oder das Ausgangsprodukt einer Sole im Sinne der Erfindung sein. Im Zusammenhang mit der Erfindung wird Wasser als "Tiefenwasser" bezeichnet, das aus dem Boden gefördert wird. Zum Beispiel wird im Oberrheingraben heißes Tiefenwasser aus dem Boden gefördert, um die thermische Energie des Tiefenwassers zur Stromerzeugung und/oder Wärmeversorgung zu nutzen. Diese Nutzung des Tiefenwassers wird auch als "Geothermie" bezeichnet. Dieses Tiefenwasser enthält auch Lithium-Ionen.

Häufig wird man lithiumhaltiges Grund- und Tiefenwasser nicht direkt als Sole verwenden (können), weil der Lithium-Gehalt nicht ausreicht, um Lithiumcarbonat auszufällen. Die Erhöhung des Lithium-Gehalts des Grund- oder Tiefenwassers ist nicht Gegenstand dieser Erfindung. Die Lithium-Konzentration der Sole sollte unabhängig von deren Ursprung mindestens 1,5 g Lithium je Liter Sole betragen.

Lithium kommt unter anderem in wiederaufladbaren Lithium-Ionen-Akkumulatoren in Notebook-Computern, Mobiltelefonen und Elektroautos zum Einsatz. Die Nachfrage nach Lithium-Ionen-Akkumulatoren steigt unter anderem im Zuge der Elektromobilität stark an. In solchen Akkumulatoren liegt Lithium im Elektrodenmaterial (fest) und m Elektrolyt (flüssig) vor. Nach einigen Jahren haben die Akkumulatoren das Ende ihrer Lebensdauer erreicht und müssen recycelt werden.

Auch die Lösungen, die nach dem Recycling von Lithium-Ionen-Akkumulatoren entstehen, sind eine Sole oder das Ausgangsprodukt einer Sole im Sinne der Erfindung. Derzeit sind zwei Recycling-Technologien für lithium-Ionen-Akkumulatoren bekannt: Die Hydrometallurgie und die Pyrometallurgie.

Bei der Hydrometallurgie werden die Akkumulatoren zerlegt, gemahlen und das Mahlgut anschließend gesiebt. Beim Sieben werden vor allem Kunststoffe und Metalle separiert.

Anschließend werden weitere Rohstoffe aus dem Mahlgut mit Hilfe einer Säure (in der Regel Schwefelsäure) gelöst. Dieser Schritt wird auch als "Auslaugen" bezeichnet.

Die gelösten Rohstoffe liegen nun als lithiumhaltige Lösung (Sole) vor und sollen möglichst effektiv von dieser Lösung getrennt werden, so dass am Ende des Trenn-Prozesses Rohstoffe, insbesondere das Lithium, in relativ reiner Form vorliegt. Dieser Schritt wird auch als "Trennen" bezeichnet.

Bei der Pyrometallurgie werden die Akkumulatoren in einen Schmelzofen gegeben. Dabei verbrennen die brennbaren Bestandteile des Mahlguts und es werden verschiedene Metalle zurückgewonnen. Übrig bleibt eine Schlacke in der das gesuchte Lithium, aber auch Aluminium gebunden sind.

Aus dieser Schlacke wird das Lithium mit Hilfe von Säuren, wie zum Beispiel einer Mischung von Schwefelsäure und Salzsäure oder mit einem hydrothermischen Verfahren gelöst. Dieser Schritt wird auch als "Auslaugen" bezeichnet. In dieser sauren wässrigen Lösung (Sole) befindet sich Lithium in Form einer lithiumhaltigen Lösung.

Das Lithium soll möglichst effektiv von der Sole (lithiumhaltige Lösung) getrennt werden, so dass es am Ende des Trenn-Prozesses in relativ reiner Form vorliegt. Dieser Schritt wird auch als "Wiedergewinnung" bezeichnet.

Der Erfindung liegt die Aufgabe zugrunde, ein Verfahren und eine Vorrichtung bereitzustellen mit deren Hilfe aus einer Sole relativ reines Lithiumcarbonat effizient und wirtschaftlich abgetrennt werden kann.

Diese Aufgabe wird erfindungsgemäß durch ein Verfahren zur Gewinnung von Lithiumcarbonat aus Sole, welche Lithium-Ionen enthält, gelöst, das folgende Schritte umfasst:
Zunächst wird die Sole einem Behälter zugeführt und es wird Kohlendioxid (CO₂), bevorzugt in gasförmiger Form, in die Sole eingebracht. Dadurch entsteht das gewünschte Lithiumcarbonat (Li₂CO₃). Es liegt in fester Form vor und fällt aus der Sole aus. Gleichzeitig wird der pH-Wert der Lösung niedriger.

Das Lithiumcarbonat liegt in fester und möglicherweise mindestens teilweise kristalliner Form vor und kann beispielsweise durch Filtern, von der Sole abgetrennt werden. Dadurch, dass das Lithiumcarbonat als Feststoff vorliegt, kann es - anders als das Lithium in Lösung - allein schon wegen der Volumenminderung - sehr einfach und kostengünstig transportiert werden. Auch ist das Lithiumcarbonat nicht reaktiv, so dass der Transport und die Lagerung ungefährlich sind.

Das Abtrennen fester Stoffe aus einer Flüssigkeit, wie z.B. Sole, ist ein seit langem bekannter Verfahrensschritt, der auf verschiedene Arten und Weisen durchgeführt werden kann. Der einschlägige Fachmann kennt Zentrifugen, Filter, Pressen und andere Apparate, mit deren Hilfe er die Abtrennung vornehmen kann.

Vorzugsweise wird ein Teilstrom der Sole aus dem Behälter durch eine Vorrichtung zum Verdampfen und anschließend wieder in den Behälter gefördert, wobei Wasser durch Verdampfen, also durch die Vorrichtung zum Verdampfen bzw. in der Vorrichtung zum Verdampfen, aus der Sole entfernt wird, sodass der Lithiumgehalt der Sole oberhalb eines vorgegebenen Grenzwerts bleibt. Vorzugsweise beträgt der vorgegebene Grenzwert 1,5 g Lithium / Liter Sole. Bevorzugt wird der Lithiumgehalt der Sole gemessen und die Vorrichtung zum Verdampfen und/oder eine Umwälzpumpe zum Fördern des Teilstroms der Sole aus dem Behälter werden derart angesteuert, dass der Lithiumgehalt der Sole den vorgegebenen Grenzwert nicht unterscheitet.

Damit die Fällung kontinuierlich abläuft, ist es vorteilhaft, der Sole kontinuierlich oder in diskreten Zeitabschnitten eine Base oder ein Gemisch von Basen zuzugeben, um den pH-Wert der Sole oberhalb eines vorgegebenen Grenzwerts (pHₘᵢₙ) zu halten. Der pH-Wert der Base sollte höher als 8 sein. Bevorzugt wird der pH-Wert der Sole gemessen und die Base oder das Gemisch der Basen wird der Sole derart zugegeben, dass der pH-Wert der Sole einen pH-Wert von 8 nicht unterschreitet.

Die Base bildet zusammen mit der bei der Bildung von Lithiumcarbonat entstehende Säure ein Salz. Wenn als Base Natronlauge (NaOH) zugegeben wird und die Sole Lithiumchlorid enthält, dann entsteht aus Salzsäure und Natronlauge je nach Löslichkeitsbedingungen gegebenenfalls auch Kochsalz (NaCl), das entweder gelöst oder ebenfalls in fester, mindestens teilweise kristalliner Form vorliegt. Dieses in fester Form vorliegende Salz wird zusammen mit dem Lithiumcarbonat von der Sole getrennt.

Gleichzeitig entsteht bei der Bildung des Salzes Wasser (H₂O). Dadurch sinkt der Lithiumgehalt der Sole. Infolgedessen verlangsamt sich die Bildung von Lithiumcarbonat. Damit die Bildung von Lithiumcarbonat nicht verlangsamt wird, ist in einer vorteilhaften Weiterbildung des Verfahrens vorgesehen, dieses Wasser durch Verdampfen zu entfernen. Dadurch bleibt der Lithiumgehalt der Sole oberhalb eines vorgegebenen Grenzwerts GW_{Li}. Der Grenzwert GW_{Li} kann zum Beispiel 1,5 g Lithium / Liter Sole (entspricht 1500 ppm) betragen.

Um den Energiebedarf für das Verdampfen des Wassers zu verringern, ist als Option vorgesehen, die zum Verdampfen eingesetzte thermische Energie mindestens teilweise wiederzugewinnen. Das kann beispielsweise dadurch erfolgen, dass der abgezogene Wasserdampf in einem Kondensator im Gegenstrom mit der Sole, die verdampft werden soll, geführt wird. Dann wird die Verdampfungsenthalpie des kondensierenden Wasserdampfs zur Vorwärmung der Sole genutzt. Alternativ ist es auch möglich, die Sole mittels Brüdenverdichtung zu konzentrieren. Selbstverständlich sind diese zwei exemplarisch genannten Möglichkeiten der internen Wärmegewinnung nicht abschließend. Es ist auch möglich, die Verdampfungsenthalpie des abgezogenen Wasserdampfs an anderer Stelle zu benutzen (externe Wärmegewinnung).

Das erfindungsgemäße Verfahren kann mit Sole verschiedensten Ursprungs durchgeführt werden. Die Sole kann beispielsweise aus einem pyrometallurgischen oder hydrometallurgischen Recyclingverfahren von Lithium-Ionen-Akkumulatoren, aus Grund-oder Tiefenwasser und/oder Meerwasser bzw. Meerwasserentsalzungsanlagen stammen.

Das zur Herstellung von Lithiumcarbonat erforderliche Kohlendioxid CO₂ kann ebenfalls aus verschiedenen Quellen stammen. Es kann aus Tiefenwasser, das nicht selten vergleichsweise hohe CO₂-Gehalte aufweist, einem industriellen Prozess, insbesondere der Zementherstellung, oder den Rauchgasen entstammen, die bei der Verbrennung kohlenstoffhaltiger Brennstoffe entstehen.

Durch die Verwendung von Kohlendioxid CO₂ aus diesen Quellen werden die CO₂-Emmissionen in die Atomsphäre reduziert.

Vorzugsweise entstammt das Kohlendioxid aus Tiefenwasser und wird dem Tiefenwasser durch eine Gasbrücke entnommen und dann dem Behälter zugeleitet.

Besonders bevorzugt entstammen die Sole und das Kohlendioxid demselben Tiefenwasser. Die Sole kann mittels einer Lithium-Extraktionseinheit aus dem Tiefenwasser gewonnen werden.

Wenn das Kohlendioxid aus (geothermischem) Tiefenwasser stammt, kann anschließend das abgereicherte, aber immer noch CO₂ enthaltende Gas wieder in das Tiefenwasser zurückgeführt werden, bevor das Tiefenwasser wieder zurück in den Untergrund gefördert wird. Dadurch wird kein Kohlendioxid aus dem Tiefenwasser in die Atmosphäre abgegeben.

Wenn das Kohlendioxid aus Industrieprozessen, wie z.B. der Zementherstellung oder den Rauchgasen entstammt, die bei der Verbrennung kohlenstoffhaltiger Brennstoffe entstehen, dann wird dieses Kohlendioxid in dem Lithiumcarbonat gebunden und kann nicht in die Atmosphäre entweichen. In der Folge werden weniger CO₂-Emmissionen verursacht und es werden weniger CO₂-Zertifikate verbraucht. Das hat unmittelbar positive Folgen auf die Umwelt, aber auch auf die Wirtschaftlichkeit des Verfahrens.

Die oben genannte Aufgabe wird auch gelöst durch eine Vorrichtung zur Gewinnung von Lithiumcarbonat aus Sole, umfassend einen Behälter, wobei der Behälter eine Sole-Zuleitung, eine Kohlendioxid-Zuleitung, eine Ableitung für CO₂-armes bzw. abgereichertes Gas und eine Entnahme für Lithiumcarbonat und Salz umfasst.

Dieser einfache Apparat ermöglicht es der flüssigen Sole Kohlendioxid zuzuführen. Bevorzugt wird das Kohlendioxid in gasförmiger Form zugeführt, so dass ein intensiver Kontakt zwischen dem Kohlendioxid und der Lithium-Ionen enthaltenden Sole entsteht und eine entsprechend schnelle Umsetzung des Lithiumchlorids in Lithiumcarbonat erfolgt.

Apparatetechnisch kann es von Vorteil sein, wenn am Boden des Behälters ein siebartiger Boden vorgesehen ist, durch den das CO₂-haltige Gas eingeblasen wird. Es ist auch möglich, dass eine Lanze in die Sole geführt wird und an deren Ende das CO₂-haltige Gas austritt. Für das erfindungsgemäße Verfahren ist es nicht erforderlich, dass reines Kohlendioxid zugeführt wird. Es ist vielmehr ausreichend, wenn ein Kohlendioxid enthaltendes Gas zugeführt wird, um die gewünschte Reaktion auszulösen.

Der Behälter umfasst vorteilhafterweise auch eine Zuleitung für eine Base. Außerdem sind Ventile, Förderpumpen und Umwälzpumpen vorgesehen, die es ermöglichen, kontrolliert einen Strom von Sole, einen Strom von CO₂-reichem Gas und eine Base zuzuführen.

Außerdem ist eine Vorrichtung zum Verdampfen von Wasser aus der Sole vorgesehen. Diese Vorrichtung ist über eine Zuleitung und eine Ableitung an den Behälter angeschlossen. Eine Umwälzpumpe ist vorhanden, welche die Sole durch die Zuleitung, die Vorrichtung zum Verdampfen und die Ableitung fördert. Die Umwälzpumpe ist also dazu ausgebildet, die Sole aus dem Behälter, durch die Zuleitung, die Vorrichtung zum Verdampfen, die Ableitung und wieder zurück in den Behälter zu fördern. Die Umwälzpumpe kann beispielsweise in der Zuleitung oder in der Ableitung angeordnet sein. Die Vorrichtung zum Verdampfen von Wasser aus der Sole kann mit thermischer Energie verschiedenen Ursprungs beheizt werden. Beispielsweise kann bei der Verwendung von Sole aus geothermischem Tiefenwasser die Enthalpie des Tiefenwassers zum Verdampfen genutzt werden. Selbstverständlich sind auch alle anderen bekannten und wirtschaftlich sinnvollen Arten der Energiezufuhr / der Erwärmung des Verdampfers möglich.

Um den Energiebedarf für das Verdampfen von Wasser aus der Sole zu minimieren, ist vorteilhafterweise eine Wärmerückgewinnung vorgesehen. Die Wärmerückgewinnung kann in Form eines Kondensators oder einer Brüdenverdichtung erfolgen. Auch hier kennt der Fachmann eine Vielzahl von etablierten Vorrichtungen und Apparaten zur Wärmerückgewinnung, die auch im vorliegenden erfindungsgemäßen Anwendungsfall zum Einsatz kommen können.

Um die Reaktionsgeschwindigkeit und den Prozess konstant und effektiv ablaufen zu lassen, umfasst die Vorrichtung mindestens einen Sensor zur Erfassung des pH-Werts und der Temperatur der Sole. Dabei ist der pH-Wert der Sole in dem Behälter von Bedeutung, da dort die Umsetzung der Lithium-Ionen enthaltenden Sole in Lithiumcarbonat stattfindet. In Abhängigkeit des pH-Werts der Sole in dem Behälter kann die Zugabe einer Base gesteuert werden. Ist der pH-Wert zu niedrig, wird mehr Base zugeführt und der pH-Wert steigt. Infolgedessen wird mehr Carbonat gebildet und der pH-Wert der Sole sinkt.

In weiterer vorteilhafter Ausgestaltung weist die Vorrichtung mindestens einen Sensor oder eine Vorrichtung zur Erfassung des Lithiumgehalts der Sole in dem Behälter auf. Dadurch kann die Verdampfung bzw. der Abzug überschüssigen Wassers, das durch die Salzbildung entsteht, gesteuert oder geregelt werden.

Wenn der Lithiumgehalt unter einen vorgegebenen Grenzwert GW_{Li} absinkt, dann wird die Verdampfung von Wasser aus der Sole intensiviert, so dass der Lithiumgehalt der Sole in dem Behälter ansteigt.

Damit der Prozess automatisch und mit konstant hoher Reaktionsgeschwindigkeit und gleichbleibender Qualität erfolgt, ist eine Vorrichtung bzw. ein Steuergerät zur Steuerung und/oder Regelung der Vorrichtung vorgesehen. Das Steuergerät hat als Eingangsgrößen beispielsweise den pH-Wert und Temperatur der Sole in dem Behälter und/oder die Konzentration der Lithium-Ionen in der Sole in dem Behälter und kann ausgehend von diesen Eingangswerten die Zuleitung von Sole, von CO₂-reichem Gas, und/oder die Verdampfung von Wasser aus der Sole zur Anhebung des Lithiumgehalts steuern und/oder regeln.

Das Steuergerät steuert über nicht dargestellte drahtlose oder leitungsgebundene Verbindungen die Ventile, Klappen und Pumpen der Vorrichtung, um unter anderem die Grenzwerte bezüglich pH-Wert und Lithium-Gehalt der Sole einzuhalten.

Die Gewinnung von Lithiumcarbonat findet in einem Temperaturbereich zwischen 40° C und 100° C, bevorzugt bei 50-80° C statt.

Die Erfindung betrifft außerdem eine Anordnung zur Gewinnung von Lithiumcarbonat aus Lithium-Ionen haltigem Tiefenwasser mit den Merkmalen des Anspruchs 15.

Die Anordnung umfasst eine wie zuvor beschrieben ausgebildete Vorrichtung zur Gewinnung von Lithiumcarbonat aus Sole. Außerdem umfasst die Anordnung eine Entnahmestelle für Lithium-Ionen haltiges Tiefenwasser und eine Lithium-Extraktionseinheit zur Gewinnung von Sole aus dem Tiefenwasser. Die Lithium-Extraktionseinheit ist eingangsseitig mit der Entnahmestelle fluidisch verbunden. Die Lithium-Extraktionseinheit ist ausgangsseitig durch die Sole-Zuleitung mit dem Behälter der Vorrichtung zur Gewinnung von Lithiumcarbonat aus Sole fluidisch verbunden.

Die Lithium-Extraktionseinheit kann zur Gewinnung der Sole eine Absorptionskolonne mit einem Absorptionsmittel oder einem Adsorptionsmittel aufweisen.

Vorzugsweise umfasst die Anordnung eine Gasbrücke zur Entnahme von Kohlendioxid aus dem Tiefenwasser, wobei die Gasbrücke durch die Kohlendioxid-Zuleitung der Vorrichtung zur Gewinnung von Lithiumcarbonat aus Sole mit dem Behälter fluidisch verbunden ist.

Vorzugsweise ist die Lithium-Extraktionseinheit ausgangsseitig, zusätzlich zu dem Behälter, mit einer Abgabestelle zum Einpressen des Tiefenwassers in den Untergrund fluidisch verbunden.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
Figur 1 ein Ablaufdiagram eines Ausführungsbeispiels des erfindungsgemäßen Verfahrens;
Figur 2 eine schematische Darstellung einer erfindungsgemäßen Vorrichtung; und
Figur 3 die Integration der erfindungsgemäßen Vorrichtung in eine Vorrichtung zur Nutzung von Tiefenwasser.

### Beschreibung der Ausführungsbeispiele

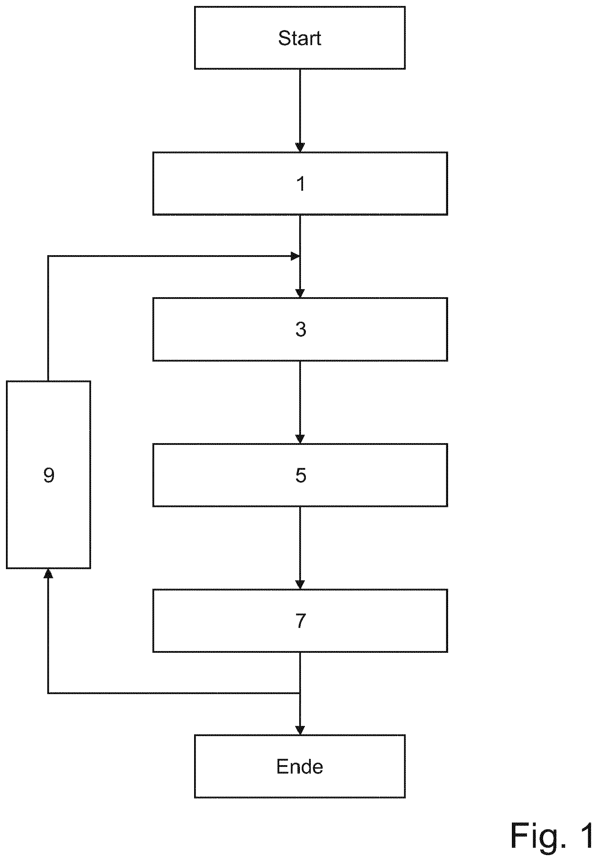

In der Figur 1 ist ein Ablaufdiagramm des erfindungsgemäßen Verfahrens dargestellt. Es beginnt im Block 1 mit der Zuführung von Sole (z. B. LiCl-Lösung) in einen Behälter. In Block 3 wird bevorzugt gasförmiges Kohlendioxid in den Behälter geleitet. Dabei muss es sich nicht um reines Kohlendioxid handeln. Es kann auch ein Gasgemisch zugeführt werden, das Kohlendioxid in ausreichender Konzentration enthält. Zum Beispiel könnten die Rauchgase zugeführt werden, die bei der Verbrennung kohlenstoffhaltiger Brennstoffe entstehen.

Das Gas kann oberhalb des freien Flüssigkeitsspiegels der Sole in den Behälter eingebracht werden. Es ist jedoch in vielen Fällen vorteilhaft, das Gas bzw. das Kohlendioxid direkt in die Sole einzublasen. Dies kann über eine Lanze erfolgen, deren Ende in die Sole eintaucht. Es ist auch möglich, dass am Boden des Behälters eine Vielzahl von Öffnungen vorgesehen sind, über die die Sole eingeblasen wird. Ziel ist es, einen möglichst guten Kontakt zwischen dem CO₂ und den lithiumhaltigen Ionen in der Sole herzustellen. Dadurch erfolgt eine rasche und effiziente Umsetzung der lithiumhaltigen Ionen in Lithiumcarbonat.

Wenn die Sole Lithiumchlorid enthält, dann entsteht durch die Reaktion des Lithiumchlorids (LiCl) mit dem Kohlendioxid CO₂ das gewünschte Lithiumcarbonat Li₂CO₃. Als Nebenprodukt entsteht Salzsäure (HCl), die sich in der Sole anreichert. Dadurch sinkt der pH-Wert der Sole ab. Das ist unerwünscht, weil mit sinkendem pH-Wert die Entstehung von Lithiumcarbonat verlangsamt wird.

Damit der pH-Wert der Sole nicht absinkt, wird in einem weiteren Schritt 5 eine Base zugegeben. In der Regel wird die Base der Sole zugeführt, bevor das kohlendioxidhaltige Gas in die Sole eingeblasen wird. Bevorzugt soll die Sole nach dem Einblasen des Gases einen pH-Wert von größer 8 aufweisen.

Es können auch Mischungen von Basen zugegeben werden. Bevorzugt Basen sind Lithiumhydroxid (LiOH), Natronlauge (NaOH) und/oder Kaliumhydroxid (KOH).

Wenn Natronlauge (NaOH) eingesetzt wird, dann entstehen aus der Natronlauge und der Salzsäure in der Sole Kochsalz (NaCl) und Wasser (H₂O). Das Kochsalz fällt - wie das Lithiumcarbonat - teilweise in fester Form an. Diese Feststoffe werden kontinuierlich oder in Intervallen aus der Sole entfernt (Block 7). Das Entfernen oder Abtrennen des Lithiumcarbonats und des Salzes kann beispielsweise durch Zentrifugieren, Filtern und anschließendes Pressen oder ein anderes aus dem Stand der Technik bekanntes Verfahren erfolgen.

Wegen der Bildung des Lithiumcarbonats und des bei der Salzbildung entstehenden Wassers sinkt im Laufe der Zeit die Konzentration der Lithium-Ionen in der Sole, was den Prozess verlangsamt. Daher ist in weiterer vorteilhafter Ausgestaltung der Erfindung vorgesehen, Wasser aus der Sole zu entfernen. Dies geschieht bevorzugt durch Verdampfen und ist in dem Block 9 der Figur 1 angedeutet. Die Sole, der zumindest ein Teil des Wassers entzogen wurde, wird anschließend wieder dem Behälter zugeführt.

Der beim Verdampfen entstehende Wasserdampf wird abgezogen (nicht dargestellt in der Figur 1) und kann anschließend entweder in die Kanalisation abgeleitet werden oder einer anderen Verwendung zugeführt werden.

Um den Energiebedarf des Verdampfens zu minimieren, ist vorteilhafterweise eine Rückgewinnung der zum Verdampfen eingesetzten thermischen Energie vorgesehen. Die Rückgewinnung kann beispielsweise in einem Wärmetauscher bzw. Kondensator erfolgen oder mit einer Brüdenverdichtung. Es ist auch möglich, die Verdampfungsenthalpie, die sich in dem abgezogenen Wasserdampf befindet, an anderer Stelle zu nutzen (externe Rückgewinnung).

Das erfindungsgemäße Verfahren kann mit Sole verschiedenen Ursprungs betrieben werden. Sie kann beispielsweise aus einem pyrometallurgischen oder hydrometallurgischen Recyclingverfahren von Lithium-Ionen-Akkumulatoren, aus Tiefenwasser und/oder Meerwasser stammen.

Das Kohlendioxid, welches zur Gewinnung des Lithiumcarbonats benötigt wird, kann aus dem Tiefenwasser, einem industriellen Prozess, insbesondere der CO₂-Abscheidung bei der Zementherstellung, oder den Rauchgasen von Kraftwerken stammen.

Das erfindungsgemäße Verfahren ist sehr effizient, kostengünstig und relativ einfach in der Durchführung. Daher ist eine industrielle Produktion von Lithiumcarbonat mit Hilfe des erfindungsgemäßen Verfahrens wirtschaftlich und störungsfrei möglich.

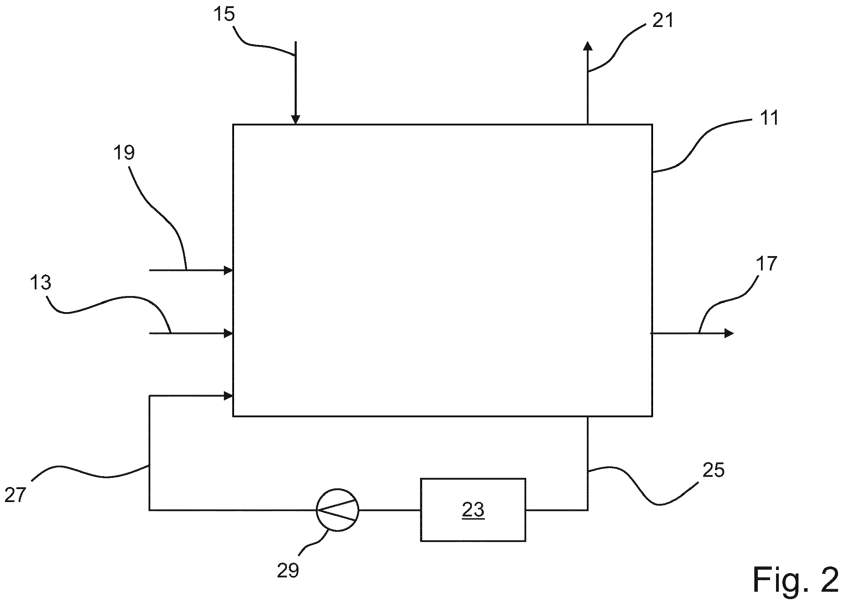

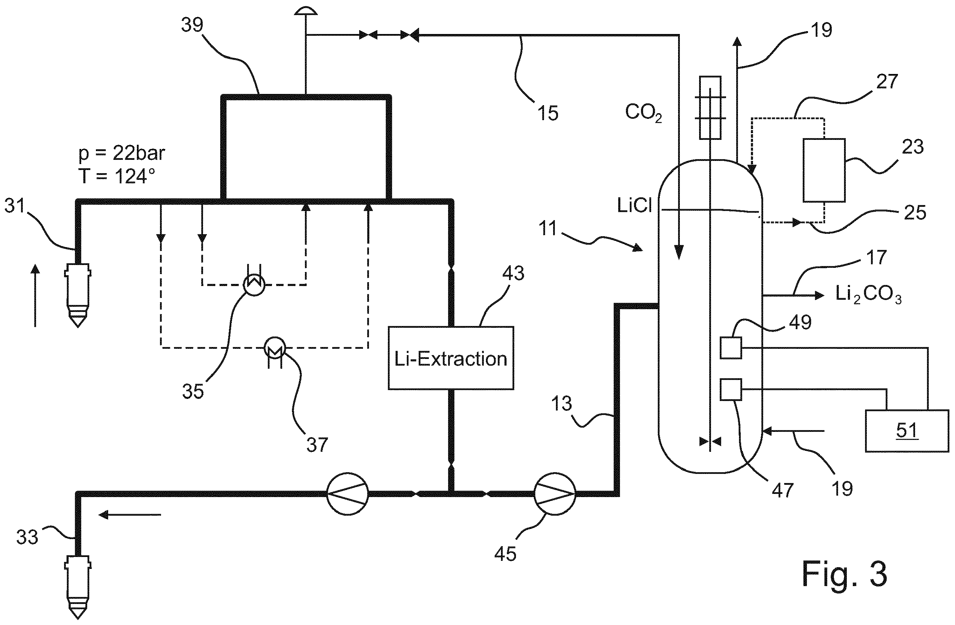

In der Figur 2 ist stark vereinfacht und schematisiert eine erfindungsgemäße Vorrichtung dargestellt. Sie umfasst einen Behälter 11, wobei der Behälter 11 eine Sole-Zuleitung 13 und eine Kohlendioxid-Zuleitung 15 umfasst. Die Kohlendioxid-Zuleitung 15 mündet in die der Sole, d.h. unterhalb eines Flüssigkeitsspiegels (ohne Bezugszeichen in der Figur 3) der Sole.

Des Weiteren ist eine Entnahme 17 für Lithiumcarbonat und gegebenenfalls einem Salz vorgesehen. Das Lithiumcarbonat und das Salz liegen in kristalliner Form vor. Daher kann die Entnahme 17 beispielsweise in Form eines Filters oder eines anderen Apparats geschehen. Der Filter oder Apparat trennt das in kristalliner Form vorliegende Lithiumcarbonat und das Salz von der flüssigen Sole. Die Sole wird in jedem Fall wieder in den Behälter 11 zurückgeführt.

Des Weiteren ist eine Zuleitung 19 für eine Base vorgesehen. Über die Zuleitung 19 wird eine Base zugeführt, um die sich im Behälter 11 bildende Säure zu neutralisieren. Das geschieht durch die Bildung eines Salzes.

Des Weiteren ist noch ein optionaler Abzug 21 für abgereichertes bzw. CO₂-armes Gas vorgesehen. Über den Abzug 21 wird das CO₂-reiche Gas, welches über die Kohlendioxid-Zuleitung 15 in den Behälter 11 eingebracht wurde, abgezogen, nachdem es in dem Behälter 11 Kohlendioxid abgegeben hat.

Schließlich ist noch eine Vorrichtung zum Verdampfen 23 vorhanden, die über eine Zuleitung 25 und eine Ableitung 27 an den Behälter 11 angeschlossen ist. Eine Pumpe 29 fördert einen Teilstrom der Sole aus dem Behälter 11 durch die Vorrichtung zum Verdampfen 23 und anschließend wieder in den Behälter 11.

Die Vorrichtung umfasst darüber hinaus Ventile, Klappen und/oder Pumpen, die nicht dargestellt sind. Mit Hilfe dieser Pumpen und Klappen wird der Strom der Sole durch die Sole-Zuleitung 13, der Base durch die Zuleitung 19 sowie die Zufuhr von Kohlendioxid bzw. einem CO₂-reichen Gas durch die Kohlendioxid-Zuleitung 15 und die Entnahme 17 des Lithiumcarbonats gesteuert bzw. geregelt.

Es handelt sich dabei um Standardkomponenten, die dem Fachmann bekannt sind und die daher nicht gesondert dargestellt und erläutert werden.

In der Figur 3 ist der Behälter 11 in einer Anwendung bei der Gewinnung von Lithiumcarbonat aus Tiefenwasser (Geothermie) dargestellt. Diese Anwendung ist sehr vorteilhaft, weil neben der thermischen Nutzung des Tiefenwassers (Stromerzeugung, Wärmeversorgung von Gebäuden und Fertigungsprozessen) noch der Rohstoff Lithium auf eine sehr umweltverträgliche und wirtschaftliche Weise gewonnen wird. Allerdings ist, wie bereits mehrfach erwähnt, die Erfindung nicht auf diese Anwendung beschränkt.

An einer Entnahmestelle 31 wird Tiefenwasser aus dem Erdboden gefördert. Es kann eine Temperatur von 124°C und einen Druck von 22 bar haben. Nach der Nutzung wird das Tiefenwasser in einer Abgabestelle 33 wieder in den Untergrund gepresst. Der Druck hat sich dabei auf beispielsweise 18 bar reduziert und die Temperatur beträgt nur noch 60°C.

Die Temperaturdifferenz von über 60°C (124°C - 60°C = 64) ist damit zu erklären, dass die thermische Energie dem Tiefenwasser entzogen und beispielsweise in einem Kraftwerk in elektrische Energie umgewandelt wurde. Alternativ oder zusätzlich ist es auch möglich, mit dem an der Entnahmestelle 31 entnommenen heißen Tiefenwasser eine Nah- und Fernwärmeversorgung zu betreiben oder thermische Verbraucher in Industriebetrieben zu versorgen. Die Stromerzeugung ist mit dem Bezugszeichen 35 versehen. Die Nah-/Fernwärmeversorgung hat das Bezugszeichen 37.

Wenn die Gewinnung von Lithiumcarbonat bei Temperaturen von weniger als 60° C stattfindet, dann kann die Lithium-Ionen enthaltende Sole mit dem auf etwa 60° C abgekühlten Tiefenwasser erwärmt werden. Dadurch wird der Energiebedarf des erfindungsgemäßen Verfahrens deutlich reduziert.

Dass an der Entnahmestelle 31 entnommene Tiefenwasser enthält in vielen Fällen Kohlendioxid CO₂, das bei gegebenem Druck zumindest teilweise in Form von Gasblasen vorliegt. Diese Gasblasen sind bei der Stromerzeugung 35 und in dem Nahwärmeversorgungssystem 37 nicht erwünscht, weil die Gasblasen den Wärmeübergang zwischen dem Tiefenwasser und einem Arbeitsmittel über einen Wärmeübertrager verschlechtern. Daher wird das Kohlendioxid CO₂ über eine Gasbrücke 39 aus dem noch heißen Tiefenwasser entnommen. Es wird über die aus der Figur 2 bekannte Kohlendioxid-Leitung 15 dem erfindungsgemäßen Behälter 11 zugeführt.

Dem Tiefenwasser wird nach der energetischen Benutzung (siehe die Bezugszeichen 35 und 37) noch Lithium entnommen. Dieser Prozess ist mit dem Bezugszeichen 43 bezeichnet und nicht Gegenstand der Erfindung. Letztendlich wird dabei aus dem Tiefenwasser eine lithium-ionen-haltige Sole hergestellt, die einen Mindestgehalt von 1,5 g Lithium pro Liter Sole aufweist. Diese Sole wird mit Hilfe einer Pumpe 45 in den Behälter 11 gefördert.

In den Behälter 11 mündet neben der bereits erwähnten Kohlendioxid-Zuleitung 15 noch die Sole-Zuleitung 13.

Darüber hinaus sind eine Entnahme 17 für Lithiumcarbonat und gegebenenfalls einem Salz sowie die (optionale) Zuleitung 19 für eine Base und der ebenfalls optionale Abzug 21 für abgereichertes bzw. CO₂-armes Gas vorgesehen.

Schließlich ist noch eine Vorrichtung zum Verdampfen 23 vorhanden, die über eine Zuleitung 25 und eine Ableitung 27 an den Behälter 11 angeschlossen ist. Die Pumpe 29 (siehe Figur 2) ist in der Figur 3 nicht dargestellt.

Die Figur 3 veranschaulicht mehrere Vorteile des erfindungsgemäßen Verfahrens/ der erfindungsgemäßen Vorrichtung bei der Gewinnung von Lithiumcarbonat aus Tiefenwasser:
Die energetische Nutzung des Tiefenwassers wird in keiner Weise beeinträchtigt.

Die Hauptkomponenten lithiumhaltige Sole und Kohlendioxid stammen aus dem einer Quelle, nämlich dem Tiefenwasser.

Es werden keine nennenswerten Mengen von Verbrauchsmaterial benötigt.

Unter anderem ist der Energiebedarf des Verfahrens relativ gering, unter anderem wegen der Wärmerückgewinnung.

Das überschüssige Kohlendioxid kann nach der energetischen Nutzung in das abgehkühlte Tiefenwasser eingepresst und über die Abgabestelle 33 wieder in den Untergrund gepumpt werden.

Es entstehen keine oder nur geringe Kohlendioxidemissionen bei der erfindungsgemäßen Gewinnung von Lithiumcarbonat.

Damit das erfindungsgemäße Verfahren und die erfindungsgemäße Vorrichtung automatische und mit gleichbleibend hoher Effizienz arbeitet und das Lithiumcarbonat eine konstant hohe Qualität hat, ist ein Steuergerät 51 zur Steuerung und/oder Regelung der erfindungsgemäßen Vorrichtung nach einem der Ansprüche 11 bis 14 und/oder zur Durchführung des Verfahren nach einem der Ansprüche 1 bis 10 vorgesehen.

Des Weiteren umfasst die Vorrichtungen mindestens einen Sensor 47 zur Erfassung des pH-Werts der Sole in dem Behälter 11 und/oder mindestens einen Sensor 49 oder eine Vorrichtung zur Erfassung des Lithium-Gehalts der Sole in dem Behälter 11.

Das Steuergerät 51 steuert über nicht dargestellte drahtlose oder leitungsgebundene Verbindungen die Ventile, Klappen und Pumpen der Vorrichtung, um unter anderem die Grenzwerte bezüglich PH-Wert und Lithium-Gehalt der Sole einzuhalten.

Die Erfindung kann die folgenden Ausführungsformen umfassen:
1. Verfahren zur Gewinnung von Lithiumcarbonat (Li₂CO₃) aus Sole, welche Lithium-Ionen enthält, umfassend die folgenden Schritte:
   a) Einleiten (3) von Kohlendioxid (CO₂) in die Sole und
   b) Abtrennen (7) des in fester Form vorliegenden Lithiumcarbonats (Li₂CO₃) .
2. Verfahren nach Ausführungsform 1, dadurch gekennzeichnet, dass der Sole eine Base zugegeben wird (5), um den pH-Wert der Sole oberhalb eines Grenzwerts (pHₘᵢₙ) zu halten.
3. Verfahren nach Ausführungsform 2, dadurch gekennzeichnet, dass der Sole eine Base oder eine Mischung von Basen mit einem pH-Wert größer 8, bevorzugt Lithiumhydroxid (LiOH), Natriumlauge (NaOH) oder Kaliumhydroxid (KOH), zugegeben wird.
4. Verfahren nach Ausführungsform 2 oder 3, dadurch gekennzeichnet, dass das durch die Zugabe einer Base entstehende Salz zusammen mit dem Lithiumcarbonat (Li₂CO₃) abgetrennt wird.
5. Verfahren nach einer der vorhergehenden Ausführungsformen, dadurch gekennzeichnet, dass die Sole Lithiumchlorid (LiCl) und/oder Lithiumsulfat (LiSO₄) enthält.
6. Verfahren nach einem der Ausführungsformen 2 bis 5, dadurch gekennzeichnet, dass das bei der Bildung von Salzen entstehende Wasser (H₂O) durch Verdampfen (9) entfernt wird, so dass der Lithiumgehalt der Sole oberhalb eines vorgegebenen Grenzwerts (GW_{Li}) bleibt.
7. Verfahren nach Ausführungsform 6, dadurch gekennzeichnet, dass die zum Verdampfen eingesetzte thermische Energie mindestens teilweise wiedergewonnen wird.
8. Verfahren nach Ausführungsform 6 oder 7, dadurch gekennzeichnet, dass der abgezogene Wasserdampf kondensiert wird und die dabei freiwerdende Verdampfungsenthalpie zur Vorwärmung der Sole genutzt wird und/oder dass die Sole mittels Brüdenverdichtung aufkonzentriert wird.
9. Verfahren nach einer der vorhergehenden Ausführungsformen, dadurch gekennzeichnet, dass die Sole aus einem pyrometallurgischen oder hydrometallurgischen Recyclingverfahren von Lithium-Ionen-Akkumulatoren, aus geologischem Tiefenwasser und/oder Meerwasser stammt.
10. Verfahren nach einer der vorhergehenden Ausführungsformen, dadurch gekennzeichnet, dass das Kohlendioxid (CO₂) aus Tiefenwasser, einem industriellen Prozess, insbesondere der Zementherstellung, oder den Rauchgasen entstammt, die bei der Verbrennung kohlenstoffhaltiger Brennstoffe entstehen.
11. Vorrichtung zur Gewinnung von Lithiumcarbonat (Li₂CO₃) aus Sole umfassend einen Behälter (11), wobei der Behälter (11) eine Sole-Zuleitung (13), eine Kohlendioxid-Zuleitung (15) und eine Entnahme (17) für Lithiumcarbonat (Li₂CO₃) und Salz umfasst.
12. Vorrichtung nach Ausführungsform 11, dadurch gekennzeichnet, dass der Behälter (11) eine Basen-Zuleitung (19) und optional eine Ableitung (21) für CO₂-armes Gas umfasst.
13. Vorrichtung nach Ausführungsform 12, dadurch gekennzeichnet, dass eine Vorrichtung zum Verdampfen (23) von Wasser (H₂O) aus der Sole vorgesehen ist.
14. Vorrichtung nach Ausführungsform 13, dadurch gekennzeichnet, dass die Vorrichtung zum Verdampfen (23) über eine Zuleitung (25) und eine Ableitung (27) an den Behälter (11) angeschlossen ist.
15. Vorrichtung nach Ausführungsform 13 oder 14, dadurch gekennzeichnet, dass sie eine Umwälzpumpe (29) umfasst, welche die Sole (19 durch die Zuleitung (25), die Vorrichtung (23) zum Verdampfen und die Ableitung (27) fördert.
16. Vorrichtung nach einer der Ausführungsformen 11 bis 15, dadurch gekennzeichnet, dass sie mindestens einen Sensor (47) zur Erfassung des pH-Werts der Sole in dem Behälter (11) aufweist.
17. Vorrichtung nach einer der Ausführungsformen 11 bis 16, dadurch gekennzeichnet, dass sie mindestens einen Sensor (49) oder eine Vorrichtung zur Erfassung des Lithium-Gehalts der Sole in dem Behälter (11) aufweist.
18. Vorrichtung nach einer der Ausführungsformen 11 bis 17, dadurch gekennzeichnet, dass sie ein Steuergerät (51) zur Steuerung und/oder Regelung der Vorrichtung nach einer der Ausführungsformen 11 bis 17 und/oder zur Durchführung des Verfahrens nach einer der Ausführungsformen 1 bis 10 umfasst.

### Liste der Bezugszeichen:

1 Zuführen von Sole
3 Einleiten von Kohlendioxid
5 Zugeben einer Base
7 Abtrennen von Lithiumcarbonat und Salz (optional)
9 Verdampfen von Wasser
11 Behälter
13 Sole-Zuleitung
15 Kohlendioxid-Zuleitung 15
17 Entnahme für Lithiumcarbonat
19 Zuleitung für eine Base
21 Abzug für abgereichertes bzw. CO₂-armes Gas
23 Vorrichtung zum Verdampfen
25 Zuleitung
27 Ableitung
29 Pumpe
31 Entnahmestelle
33 Abgabestelle
35 Stromerzeugung
37 Nahwärmeversorgungssystem
39 Gasbrücke
41 -
43 Lithium-Entnahme (Herstellen von Sole aus Tiefenwasser)
45 Pumpe
47 Sensor zur Erfassung des PH-Werts
49 Sensor zur Erfassung des Lithium-Gehalts der Sole
51 Steuergerät

## Patentansprüche

1. Verfahren zur Gewinnung von Lithiumcarbonat (Li₂CO₃) aus Sole, welche Lithium-Ionen enthält, umfassend die folgenden Schritte:
a) Zuführen von Sole in einen Behälter (11) und Einleiten (3) von Kohlendioxid (CO₂) in die Sole, wobei Lithiumcarbonat (Li₂CO₃) entsteht und aus der Sole ausfällt, und
b) Abtrennen (7) des in fester Form vorliegenden Lithiumcarbonats (Li₂CO₃) von der Sole,
wobei ein Teilstrom der Sole aus dem Behälter (11) durch eine Vorrichtung zum Verdampfen (23) und anschließend wieder in den Behälter (11) gefördert wird, und wobei Wasser durch Verdampfen (9) aus der Sole entfernt wird, sodass der Lithiumgehalt der Sole oberhalb eines vorgegebenen Grenzwerts (GW_{Li}) bleibt.

2. Verfahren nach Anspruch 1, **dadurch gekennzeichnet, dass** der Sole eine Base zugegeben wird (5), um den pH-Wert der Sole oberhalb eines Grenzwerts (pHₘᵢₙ) zu halten.

3. Verfahren nach Anspruch 2, **dadurch gekennzeichnet, dass** der Sole eine Base oder eine Mischung von Basen mit einem pH-Wert größer 8, bevorzugt Lithiumhydroxid (LiOH), Natriumlauge (NaOH) oder Kaliumhydroxid (KOH), zugegeben wird.

4. Verfahren nach Anspruch 2 oder 3, **dadurch gekennzeichnet, dass** das durch die Zugabe einer Base entstehende Salz zusammen mit dem Lithiumcarbonat (Li₂CO₃) abgetrennt wird.

5. Verfahren nach einem der vorhergehenden Ansprüche, **dadurch gekennzeichnet, dass** die Sole Lithiumchlorid (LiCl) und/oder Lithiumsulfat (LiSO₄) enthält.

6. Verfahren nach einem der vorhergehenden Ansprüche, **dadurch gekennzeichnet, dass** die zum Verdampfen eingesetzte thermische Energie mindestens teilweise wiedergewonnen wird.

7. Verfahren nach einem der vorhergehenden Ansprüche, **dadurch gekennzeichnet, dass** der abgezogene Wasserdampf kondensiert wird und die dabei freiwerdende Verdampfungsenthalpie zur Vorwärmung der Sole genutzt wird und/oder dass die Sole mittels Brüdenverdichtung aufkonzentriert wird.

8. Verfahren nach einem der vorhergehenden Ansprüche, **dadurch gekennzeichnet, dass** die Sole aus einem pyrometallurgischen oder hydrometallurgischen Recyclingverfahren von Lithium-Ionen-Akkumulatoren, aus geologischem Tiefenwasser und/oder Meerwasser stammt.

9. Verfahren nach einem der vorhergehenden Ansprüche, **dadurch gekennzeichnet, dass** das Kohlendioxid (CO₂) aus Tiefenwasser, einem industriellen Prozess, insbesondere der Zementherstellung, oder den Rauchgasen entstammt, die bei der Verbrennung kohlenstoffhaltiger Brennstoffe entstehen.

10. Vorrichtung zur Gewinnung von Lithiumcarbonat (Li₂CO₃) aus Sole umfassend einen Behälter (11), wobei der Behälter (11) eine Sole-Zuleitung (13), eine Kohlendioxid-Zuleitung (15) und eine Entnahme (17) für Lithiumcarbonat (Li₂CO₃) und Salz umfasst, wobei eine Vorrichtung zum Verdampfen (23) von Wasser aus der Sole vorgesehen ist, wobei die Vorrichtung zum Verdampfen (23) über eine Zuleitung (25) und eine Ableitung (27) an den Behälter (11) angeschlossen ist, und wobei eine Umwälzpumpe (29) vorhanden ist, welche die Sole durch die Zuleitung (25), die Vorrichtung zum Verdampfen (23) und die Ableitung (27) fördert.

11. Vorrichtung nach Anspruch 10, **dadurch gekennzeichnet, dass** der Behälter (11) eine Basen-Zuleitung (19) und optional eine Ableitung (21) für CO₂-armes Gas umfasst.

12. Vorrichtung nach einem der Ansprüche 10 und 11, **dadurch gekennzeichnet, dass** sie mindestens einen Sensor (47) zur Erfassung des pH-Werts der Sole in dem Behälter (11) aufweist.

13. Vorrichtung nach einem der Ansprüche 10 bis 12, **dadurch gekennzeichnet, dass** sie mindestens einen Sensor (49) oder eine Vorrichtung zur Erfassung des Lithium-Gehalts der Sole in dem Behälter (11) aufweist.

14. Vorrichtung nach einem der Ansprüche 10 bis 13, **dadurch gekennzeichnet, dass** sie ein Steuergerät (51) zur Steuerung und/oder Regelung der Vorrichtung nach einem der Ansprüche 10 bis 13 und/oder zur Durchführung des Verfahrens nach einem der Ansprüche 1 bis 9 umfasst.

15. Anordnung zur Gewinnung von Lithiumcarbonat aus Lithium-Ionen haltigem Tiefenwasser, mit einer Vorrichtung zur Gewinnung von Lithiumcarbonat aus Sole gemäß einem der Ansprüche 10 bis 14, mit zumindest einer Entnahmestelle (31) für Lithium-Ionen haltiges Tiefenwasser, und mit einer Lithium-Extraktionseinheit (43) zur Gewinnung von Sole aus dem Tiefenwasser, wobei die Lithium-Extraktionseinheit (43) eingangsseitig mit der Entnahmestelle (31) fluidisch verbunden ist, und wobei die Lithium-Extraktionseinheit (43) ausgangsseitig durch die Sole-Zuleitung (13) mit dem Behälter (11) der Vorrichtung zur Gewinnung von Lithiumcarbonat fluidisch verbunden ist.
